(19) Europäisches Patentamt
European Patent Office
Office européen des brevets

(11) EP 4 058 798 B1

(12) FASCICULE DE BREVET EUROPEEN

(45) Date de publication et mention de la délivrance du brevet:
**07.02.2024 Bulletin 2024/06**

(21) Numéro de dépôt: **20845190.6**

(22) Date de dépôt: **14.12.2020**

(51) Classification Internationale des Brevets (IPC):
***G01N 31/22*** *(2006.01)* ***G01N 21/77*** *(2006.01)*

(52) Classification Coopérative des Brevets (CPC):
**G01N 31/221;** Y02P 10/20

(86) Numéro de dépôt international:
**PCT/FR2020/052406**

(87) Numéro de publication internationale:
**WO 2021/130423 (01.07.2021 Gazette 2021/26)**

# (54) PROCÉDÉ DE DÉTERMINATION DE L'ACIDITÉ D'UNE SOLUTION AQUEUSE ACIDE

VERFAHREN ZUR BESTIMMUNG DER AZIDITÄT EINER WÄSSRIGEN SÄURELÖSUNG

METHOD FOR DETERMINING THE ACIDITY OF AN AQUEOUS ACID SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2019 FR 1915425**

(43) Date de publication de la demande:
**21.09.2022 Bulletin 2022/38**

(73) Titulaires:
- **Commissariat à l'énergie atomique et aux énergies alternatives
75015 Paris (FR)**
- **Orano Recyclage
92320 Châtillon (FR)**

(72) Inventeurs:
- **BROUSSARD, Sylvain
30290 LAUDUN (FR)**
- **COSTENOBLE, Sylvain
30200 BAGNOLS SUR CEZE (FR)**
- **LENGRAND, Fabien
30200 BAGNOLS SUR CEZE (FR)**
- **SINOT, Johann
30330 CONNAUX (FR)**

(74) Mandataire: **Brevalex
Tour Trinity
1 B Place de la Défense
92400 Courbevoie (FR)**

(56) Documents cités:
**WO-A1-2008/137260 JP-A- 2005 195 556**

- **Université D'iéna: "9 Försterzyklus - UV/Vis-Absorptionsspektroskopie", Versuchsanleitungen, Teil 1: Chemische Thermodynamik, 1 décembre 2019 (2019-12-01), pages 71-77, XP055729307, Jena Extrait de l'Internet: URL:https://www.ipc.uni-jena.de/lehre/bc/prak+i [extrait le 2020-09-09]**
- **NÉRI-QUIROZ JOSÉ ET AL: "Miniaturizing and automation of free acidity measurements for uranium (VI)-HNO3solutions: Development of a new sequential injection analysis for a sustainable radio-analytical chemistry", TALANTA, ELSEVIER, AMSTERDAM, NL, vol. 159, 21 juin 2016 (2016-06-21), pages 330-335, XP029661783, ISSN: 0039-9140, DOI: 10.1016/J.TALANTA.2016.06.038**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 058 798 B1

## Description

### Domaine technique

L'invention se rapporte au domaine de la chimie analytique.

Plus spécifiquement, elle se rapporte à des procédés de détermination de l'acidité d'une solution aqueuse acide.

Ces procédés permettent de mesurer l'acidité totale d'une solution aqueuse comprenant un acide fort ou un mélange d'acides forts et, si cette solution comprend un ou plusieurs cations hydrolysables - c'est-à-dire un ou plusieurs cations qui sont capables de réagir avec l'eau en la dissociant en ions hydroxydes $OH^-$ et en protons $H^+$ -, d'en mesurer également l'acidité libre.

L'invention est susceptible d'être mise en oeuvre dans tous les domaines industriels et de recherche scientifique dans lesquels il peut être souhaité de mesurer l'acidité totale ou l'acidité libre de solution aqueuses d'acides forts.

Toutefois, elle présente un intérêt tout particulier :

- d'une part, pour déterminer l'acidité totale de solutions aqueuses comprenant un acide fort ou un mélange d'acides forts à une concentration si élevée qu'elle rend inadaptée l'utilisation des procédés classiquement employés pour mesurer une acidité totale tels que la pH-métrie, et
- d'autre part, pour contrôler, que ce soit en laboratoire ou sur ligne industrielle, l'acidité libre de solutions aqueuses d'acides forts qui comprennent un ou plusieurs cations hydrolysables et qui sont utilisées dans des procédés industriels dans lesquels cette acidité libre représente un paramètre clé.

À titre d'exemples de tels procédés, on peut citer les procédés hydro-métallurgiques de traitement ou d'extraction d'éléments métalliques d'intérêt, notamment de minerais, et les procédés de traitement de surfaces métalliques par décapage chimique acide.

### État de la technique antérieure

Selon la théorie de Brönsted-Lowry, un acide est une espèce chimique (ion ou molécule) capable de céder un ou plusieurs protons $H^+$ selon l'équation :

$$\underset{\text{acide}}{HA} \Leftrightarrow \underset{\text{base}}{A^-} + \underset{\text{proton}}{H^+}$$

L'acidité d'une solution aqueuse est donc caractérisée par la quantité de protons $H^+$ présents dans cette solution.

Lorsqu'une solution aqueuse comprend, outre un acide, des cations hydrolysables qui, par réaction avec l'eau, vont également céder des protons $H^+$, alors il est possible de faire une distinction entre l'acidité totale et l'acidité libre de cette solution.

Ainsi, l'acidité totale est donnée par la quantité totale de protons $H^+$ présents dans la solution aqueuse alors que l'acidité libre est donnée par la quantité de protons $H^+$ uniquement fournis par l'acide présent dans cette solution. En d'autres termes, l'acidité libre ne tient pas compte des protons $H^+$ apportés par les cations hydrolysables.

L'acidité libre est un paramètre clé de nombreux procédés industriels mettant en jeu des solutions aqueuses acides, chargées ou susceptibles de se charger en cations hydrolysables.

De nombreuses méthodes permettant de mesurer l'acidité libre de solutions aqueuses acides contenant des cations hydrolysables ont été décrites dans la littérature. Ces méthodes ont en commun d'annihiler, dans un premier temps, la réaction d'hydrolyse des cations hydrolysables, par exemple par précipitation, complexation ou fixation sur un support solide de type résine, et à déterminer ensuite l'acidité libre. Un état de l'art relatif à ces méthodes a récemment été publié par T. G. Srinivasan et P. R. Rao dans Talanta 2014, 118, 162-171, ci-après référence [1].

Récemment, un procédé de mesure de l'acidité libre de solutions aqueuses d'acide nitrique par analyse par injection séquentielle (ou SIA de « Sequential Injection Analysis ») a été proposé par J. Néri-Quiroz et al. (Talanta 2016, 159, 330-335, ci-après référence [2]).

Ce procédé, qui permet de réaliser des mesures d'acidité libre en ligne sur des échantillons de 10 $\mu$L et de générer des effluents de seulement 1,5 mL par échantillon analysé, est basé sur une complexation des cations hydrolysables par l'oxalate de potassium suivie d'un titrage par NaOH, le suivi du titrage étant réalisé par colorimétrie, en l'espèce au moyen du rouge congo.

Or, dans le cadre de leurs travaux, les Inventeurs ont réussi à développer des procédés qui permettent de déterminer avec une grande précision l'acidité totale et l'acidité libre d'une solution aqueuse acide selon le type d'acidité

que l'on souhaite déterminer.

Pour la mesure de l'acidité libre, l'invention présente non seulement les mêmes avantages que le procédé de la référence [2] (réduction du volume des échantillons analysés, réduction du volume des effluents générés, possibilité d'automatisation) mais aussi celle d'être encore plus simple à mettre en oeuvre et plus économe en réactifs parce qu'elle ne fait pas appel à une réaction de titrage acido-basique et n'utilise donc pas de réactif titrant alcalin tel que NaOH.

**Exposé de l'invention**

L'invention a donc pour objet un premier procédé qui vise à déterminer l'acidité totale d'une solution aqueuse A1 comprenant un acide fort ou un mélange d'acides forts (avec ou sans cations hydrolysables) et qui comprend au moins les étapes suivantes :

a) fourniture d'une solution aqueuse A5 par mélange :

- d'un volume V1 de la solution A1,
- d'un volume V2 d'une solution aqueuse A2 de pH noté pHA2, comprenant un composé choisi parmi un acide faible, une base faible, un sel d'un acide faible ou un sel d'une base faible, et
- d'un volume V4 d'une solution A4 comprenant un colorant sensible au pH, ayant une forme acide et une forme basique, et une zone de virage comprise entre un premier pH et un deuxième pH, le deuxième pH étant supérieur au premier pH mais inférieur à pHA2 ;

b) détermination du spectre d'absorbance UV-visible du colorant présent dans la solution A5 en prenant la solution A2 comme blanc de mesure ;

c) détermination de la concentration de l'une au moins des formes acide et basique du colorant dans la solution A5 à partir du spectre d'absorbance obtenu à l'étape b) ;

d) détermination du pH, noté pHA5, de la solution A5 à partir de la concentration déterminée à l'étape c) ; puis

e) détermination de l'acidité totale de la solution A1 à partir du pHA5 déterminé à l'étape d) ;

et dans lequel pHA2 est tel qu'un mélange des volumes V1 et V2 ait un pH qui se situe dans la zone de virage du colorant.

Ainsi, ce premier procédé est basé sur une exploitation de la zone de virage d'un colorant sensible au pH, aussi appelé indicateur coloré de pH ou indicateur acido-basique.

Toutefois, cette exploitation est différente de celle qui en est faite dans l'état de la technique antérieure puisque, selon l'invention, la zone de virage du colorant sensible au pH n'est utilisée ni pour déterminer l'intervalle de valeurs dans lequel le pH d'une solution aqueuse acide se situe ni pour repérer l'équivalence chimique d'un titrage acido-basique mais elle est utilisée pour déterminer la concentration en protons $H^+$ d'une solution aqueuse acide à partir de l'absorption de la lumière par le colorant sensible au pH.

Dans ce qui précède et ce qui suit, les termes « fort » et « faible », appliqués à un acide ou une base, ont la signification qui leur a été donnée par Brönsted-Lowry, à savoir qu'est considéré(e) comme fort(e) un acide ou une base qui se dissocie totalement dans l'eau, tandis qu'est considéré(e) comme faible, un acide ou une base qui ne se dissocie pas totalement dans l'eau.

Conformément à l'invention, le choix du composé présent dans la solution A2 (acide faible, base faible, sel d'un acide faible ou sel d'une base faible) ainsi que le choix du colorant ne sont pas spécialement limités.

Ainsi, le composé présent dans la solution A2 peut être choisi parmi les nombreux composés connus pour être des acides faibles (acides carboxyliques et acides polycarboxyliques notamment) ou des bases faibles (ammoniac, amines et polyamines notamment) ainsi que parmi leurs sels.

De manière similaire, le colorant peut être choisi parmi les nombreux composés classiquement utilisés comme indicateurs colorés de pH tels que le vert de bromocrésol, le rouge congo, le bleu de bromophénol, le jaune de méthyle, le rouge de méthyle, etc.

Toutefois, comme précédemment mentionné, pHA2, qui correspond au pH de la solution A2, doit être tel que le pH d'un mélange des volumes V1 et V2 se situe dans la zone de virage du colorant, ce qui pourra aisément être préalablement vérifié en préparant ce mélange et en déterminant son pH au moyen d'un papier pH, d'une bandelette pH, d'une sonde pH ou encore par calcul si l'ordre de grandeur de l'acidité totale de la solution A1 est connu.

Le composé présent dans la solution A2, sa concentration dans cette solution et le colorant sont donc choisis en conséquence, étant entendu toutefois que, si nécessaire, pHA2 peut être ajusté par addition à la solution A2 d'un acide fort ou d'une base forte, ou bien l'un et/ou l'autre des volumes V1 et V2 peuvent être modifiés de manière à ce que le pH de leur mélange s'inscrive dans la zone de virage du colorant.

Conformément à l'invention, la détermination du spectre d'absorbance UV-visible du colorant présent dans la solution A5 - ou étape b) - comprend de préférence :

- une acquisition du spectre d'intensité lumineuse de la solution A2 dans le domaine UV-visible ;
- une acquisition du spectre d'intensité lumineuse de la solution A5 dans le domaine UV-visible ; et
- un calcul du logarithme décimal du rapport entre les valeurs d'intensité lumineuse du spectre acquis pour la solution A5 et les valeurs d'intensité lumineuse du spectre acquis pour la solution A2 ;

les spectres d'intensité lumineuse des solutions A2 et A5 étant avantageusement acquis au moyen d'une caméra à transfert de charge, plus connue sous le nom de caméra CCD (pour « *Coupled Charge Device* »).

Le spectre d'absorbance ainsi obtenu montre deux pics (ou maxima) d'absorbance qui sont situés à deux longueurs d'onde différentes, dont l'un est caractéristique de la forme acide du colorant tandis que l'autre est caractéristique de sa forme basique, et qui varient de part et d'autre d'un point isobestique en fonction du pH de la solution A5, pHA5.

À l'étape c), la concentration de l'une au moins des formes acide et basique du colorant dans la solution A5 est avantageusement déterminée en appliquant la loi de Beer-Lambert en vertu de laquelle l'absorbance mesurée pour un soluté en solution à une longueur d'onde donnée est proportionnelle à la concentration de ce soluté dans la solution, c'est-à-dire, en pratique, en comparant l'absorbance maximale montré pour cette forme par le spectre d'absorbance obtenu à l'étape b) aux valeurs d'absorbance de courbes étalons préalablement établies à partir de solutions aqueuses comprenant le colorant à des concentrations variables et à des pH variables.

À l'étape d), pHA5 peut, par exemple, être déterminé au moyen de l'équation (1) ci-après :

$$10^{-\mathrm{pHA5}} = \frac{K_{HC} \times [HC]}{[C^-]}$$

(1)

dans laquelle :

$K_{HC}$ est la constante de dissociation de la forme acide du colorant dans la solution A5 ;
[HC] est la concentration de la forme acide du colorant dans la solution A5 en mol/L; et
$[C^-]$ est la concentration de la forme basique du colorant dans la solution A5 en mol/L.

En variante, pHA5 peut également être déterminé au moyen de l'équation (2) ci-après :

$$\mathrm{pHA5} = -\log\left(K_{HC}\left(\frac{1}{R} - 1\right)\right)$$

(2)

dans laquelle :

$K_{HC}$ est tel que précédemment défini ; et
R est le rapport entre la concentration de la forme basique du colorant dans la solution A5 et la concentration du colorant (forme acide + forme basique) dans cette solution.

À l'étape e), l'acidité totale de la solution A1, exprimée en concentration molaire des protons $H^+$, notée $[H^+]$, peut par exemple être déterminée au moyen de l'équation (3) ci-après :

$$[H^+] = \frac{10^{-\mathrm{pHA5}} \times (V1 + V2) - 10^{-\mathrm{pHA2}} \times V2 + Y}{V1}$$

(3)

dans laquelle

V1 et V2, pHA2 et pHA5 sont tels que précédemment définis, V1 et V2 étant exprimés en L; et
Y est déterminé au moyen de l'équation (4) ci-après :

$$Y = \frac{10^{-pHA5} \times [A^-] \times V2 - K_{HA} \times [HA] \times V2}{K_{HA} + 10^{-pHA5}}$$

(4)

dans laquelle :

$K_{HA}$ est la constante de dissociation acide de l'acide faible dans la solution A5 (si la solution A2 comprend un acide faible ou un sel d'un acide faible) ou de l'acide conjugué de la base faible dans la solution A5 (si la solution A2 comprend, comme composé, une base faible ou un sel d'une base faible) ;
$[A^-]$ est la concentration de la base conjuguée de l'acide faible dans la solution A3 ou de la base faible dans la solution A5 en mol/L;
[HA] est la concentration de l'acide faible dans la solution A2 ou de l'acide conjugué de la base faible dans la solution A5 en mol/L; et
V2 et pHA5 sont tels que précédemment définis, V2 étant exprimé en L.

Il est à noter que la constante de dissociation acide $K_{HA}$ de l'acide faible ou de l'acide conjugué de la base faible dans la solution A5 peut être préalablement déterminée soit à partir des données de la littérature soit, préférentiellement, de manière expérimentale.

Dans ce dernier cas, un volume V1 d'une solution aqueuse d'un acide fort de concentration C1 connue, telle qu'une solution étalon disponible dans le commerce, est ajouté au volume V2 de la solution A2, puis le pH du mélange M résultant est mesuré au moyen d'une sonde pH et $K_{HA}$ est déterminée au moyen de l'équation (5) ci-après :

$$K_{HA} = \frac{[C2 \times V2 - (C1 \times V1 + n - 10^{-pH} \times (V1 + V2))] \times 10^{-pH}}{C1 \times V1 + n - 10^{-pH} \times (V1 + V2)}$$

(5)

dans laquelle :

pH correspond au pH du mélange M ;
C1 et C2 sont tels que précédemment définis et sont exprimés en mol/L ;
V1 et V2 sont tels que précédemment définis et son exprimés en L; et
n est le nombre de moles d'acide ou de base ayant été, le cas échéant, utilisées pour ajuster le pH de la solution A2.

La constante de dissociation $K_{HC}$ de la forme acide du colorant dans la solution A5 peut également être déterminée soit à partir des données de la littérature soit, préférentiellement, de manière expérimentale.

Dans ce dernier cas, le spectre d'absorbance UV-visible du mélange M précédemment défini est déterminé en prenant la solution A2 comme blanc de mesure, puis le spectre d'absorbance d'un mélange M' résultant de l'addition au mélange M du volume V4 de solution A4 est déterminé en prenant le mélange M comme blanc de mesure.

Par référence à des courbes d'étalonnage préalablement établies, il est alors possible de déterminer, à partir des pics des formes acide et basique du colorant visibles sur le spectre d'absorbance obtenu pour le mélange M', la concentration de l'une au moins des formes acide et basique du colorant dans le mélange M' et de déterminer la constante de dissociation $K_{HC}$ au moyen de l'équation (6) ci-après :

$$K_{HC} = \frac{10^{-pH}}{\frac{1}{R} - 1}$$

(6)

dans laquelle :

pH est le pH du mélange M ; et
R est le rapport entre la concentration de la forme basique du colorant dans le mélange M' et la concentration du

colorant (forme acide + forme basique) dans ce mélange.

L'invention a également pour objet un deuxième procédé qui vise, lui, à déterminer l'acidité libre d'une solution aqueuse A1 comprenant un acide fort ou un mélange d'acides forts et un ou plusieurs cations hydrolysables et qui comprend au moins les étapes suivantes :

a) fourniture d'une solution aqueuse A3 par mélange d'un volume V1 de la solution A1 et d'un volume V2 d'une solution aqueuse A2 de pH noté pHA2, comprenant un composé choisi parmi un acide faible, une base faible, un sel d'un acide faible ou un sel d'une base faible, et un agent complexant le(s) cation(s) hydrolysable(s) à une concentration C2 ;
b) détermination du spectre d'absorbance UV-visible du (des) cation(s) hydrolysable(s) présent(s) dans la solution A3 en prenant la solution A2 comme blanc de mesure ;
c) détermination de la concentration C3 du (des) cation(s) hydrolysable(s) dans la solution A3 à partir du spectre d'absorbance obtenu à l'étape b) ;
d) fourniture d'une solution aqueuse A5 par mélange de la solution A3 et d'un volume V4 d'une solution A4 comprenant un colorant sensible au pH, ayant une forme acide et une forme basique, et une zone de virage comprise entre un premier pH et un deuxième pH, le deuxième pH étant supérieur au premier pH mais inférieur à pHA2 ;
e) détermination du spectre d'absorbance UV-visible du colorant présent dans la solution A5 en prenant la solution A2 ou la solution A3 comme blanc de mesure ;
f) détermination de la concentration de l'une au moins des formes acide et basique du colorant dans la solution A5 à partir du spectre d'absorbance obtenu à l'étape e) ;
g) détermination du pH, noté pHA5, de la solution A5 à partir de la concentration déterminée à l'étape f) ; puis
h) détermination de l'acidité libre de la solution A1 à partir de la concentration C3 déterminée à l'étape c) et du pHA5 déterminé à l'étape e) ;

et dans lequel :

pHA2 et les volumes V1 et V2 sont tels que la solution A3 a un pH noté pHA3, qui se situe dans la zone de virage du colorant ;
la concentration C2 et les volumes V1 et V2 sont tels que l'agent complexant est en excès par rapport au(x) cation(s) hydrolysable(s) dans la solution A3.

Ce deuxième procédé est basé sur le même principe que le premier procédé mais se distingue de ce dernier par le fait que, d'une part, la solution A2 comprend un agent complexant le(s) cation(s) hydrolysable(s) présent(s) dans la solution A1 dont on veut déterminer l'acidité libre et, d'autre part, il comprend la détermination par spectrométrie de la concentration de ce(s) cation(s) hydrolysable(s), cette concentration étant prise en compte pour déterminer la concentration des protons $H^+$ uniquement fournis par l'acide dans la solution A1.

Conformément à l'invention, le choix de l'agent complexant n'est pas spécialement limité pour autant que cet agent complexant permette de former des complexes stables et solubles dans l'eau avec le(s) cation(s) hydrolysable(s) connu(s) pour être présent(s) ou présumé(s) être présent(s) dans la solution A1.

Ainsi, l'agent complexant peut notamment être la glycine, un acide poly-carboxylique du type acide citrique, acide tartrique, acide oxalique ou acide succinique, un acide hydroxycarboxylique du type acide gluconique, acide idonique ou galactonique, un acide hydroxydicarboxylique du type acide glucarique, acide mucique ou acide mannarique, un acide aminopolycarboxylique du type acide iminodiacétique (ou IDA), acide nitrilotriacétique (ou NTA), acide éthylènediaminetétraacétique (ou EDTA), acide diéthylènetriaminepentaacétique (ou DTPA), acide 1,4,7,10-tétraazacyclododécane-1,4,7,10-tétraacétique (ou DOTA), ou un sel de ces acides, par exemple un sel d'un métal alcalin tel que le sodium ou le potassium, un sel d'un métal alcalino-terreux tel que le calcium ou le magnésium, voire un sel d'un métal de transition.

De préférence, le composé présent dans la solution A2 sert également d'agent complexant, ce qui est notamment possible si le composé présent dans la solution A2 est choisi parmi les acides complexants précités et leurs sels et, en particulier, si la solution A2 est une solution d'acide oxalique ou d'un sel de celui-ci.

Conformément à l'invention, l'étape b) comprend de préférence :

- une acquisition du spectre d'intensité lumineuse de la solution A2 dans le domaine UV-visible ;
- une acquisition du spectre d'intensité lumineuse de la solution A3 dans le domaine UV-visible ; et
- un calcul du logarithme décimal du rapport entre les valeurs d'intensité lumineuse du spectre acquis pour la solution A3 et les valeurs d'intensité lumineuse du spectre acquis pour la solution A2 ;

les spectres d'intensité lumineuse des solutions A2 et A3 étant avantageusement acquis au moyen d'une caméra CCD.

Le spectre d'absorbance ainsi obtenu est caractéristique du (des) cation(s) hydrolysable(s) présent(s) dans la solution A3 et, donc, dans la solution A1.

À l'étape d), la concentration C3 du (des) cation(s) hydrolysable(s) dans la solution A3 est avantageusement déterminée à partir du ou des pics d'absorbance visibles sur le spectre d'absorbance obtenue à l'étape c) pour la solution A3, en appliquant là également la loi de Beer-Lambert, c'est-à-dire en pratique en comparant l'absorbance maximale montré par le spectre d'absorbance obtenu à l'étape c) aux valeurs d'absorbance de courbes étalons préalablement établies à partir de solutions aqueuses comprenant le(s) cation(s) hydrolysable(s) connu(s) pour être présent(s) ou présumé(s) être présent(s) dans la solution A1 à des concentrations variables.

Conformément à l'invention, l'étape e) comprend de préférence :

- une acquisition du spectre d'intensité lumineuse de la solution A5 dans le domaine UV-visible ; et
- un calcul du logarithme décimal du rapport entre les valeurs d'intensité lumineuse du spectre acquis pour la solution A5 et les valeurs d'intensité lumineuse du spectre acquis pour la solution A3 ;

le spectre d'intensité lumineuse de la solution A5 étant, là également, avantageusement acquis au moyen d'une caméra CCD.

L'étape f), qui vise à déterminer la concentration de l'une au moins des formes acide et basique du colorant dans la solution A5 à partir du spectre d'absorbance obtenu à l'étape e), est avantageusement réalisée de la même manière que l'étape c) du premier procédé.

De manière similaire, à l'étape g), pHA5 est avantageusement déterminé au moyen de l'une des équations (1) et (2) précédemment définies pour l'étape d) du premier procédé.

À l'étape h), l'acidité libre de la solution A1, exprimée en concentration molaire des protons $H^+$, notée $[H^+]$, est déterminée en tenant compte de la concentration C3 déterminée à l'étape c), par exemple au moyen de l'équation (3) précédemment définie pour l'étape e) du premier procédé mais dans laquelle Y est déterminé en appliquant l'équation (7) ci-après :

$$Y = \frac{10^{-pHA5} \times \left( [A^-] \times V2 - \frac{n}{m} C3 \times V1 \right) - K_{HA} \times [HA] \times V_1}{K_{HA} + 10^{-pHA5}} \quad (7)$$

dans laquelle :

m est le coefficient stoechiométrique du (des) cation(s) hydrolysable(s) dans la réaction de complexation de ce(s) cation(s) par l'agent complexant ;

n est le coefficient stoechiométrique de l'agent complexant dans la réaction de complexation du (des) cation(s) hydrolysable(s) par cet agent ; et

V1, V2, $K_{HA}$, $[A^-]$, [HA] et C3 sont tels que précédemment définis, V1 et V2 étant exprimés en L et $[A^-]$, [HA] et C3 étant exprimés en mol/L.

Que ce soit dans le premier procédé ou dans le deuxième, la solution A2 comprend, de préférence, un acide faible ou un sel d'un acide faible.

De manière préférée, la solution A2 comprend de l'acide oxalique ou un sel de celui-ci, de préférence de l'oxalate de sodium.

Par ailleurs, le colorant est, de préférence, le vert de bromocrésol dont la zone de virage est comprise entre pH 3,8 et pH 5,4.

Auquel cas, on préfère tout particulièrement que la solution A2 soit une solution comprenant 0,27 mol/L d'oxalate de sodium et dont le pH, initialement de 8, soit ajusté par addition d'un acide fort, par exemple de l'acide sulfurique, de sorte à être supérieur à 5,4 tout en étant inférieur à 8, par exemple compris entre 5,5 et 6.

Quant à la solution A1, elle est, de préférence, une solution aqueuse d'acide nitrique comprenant ou non des cations hydrolysables.

Toutefois, la solution A1 peut également être une solution aqueuse autre que d'acide nitrique telle qu'une solution aqueuse comprenant de l'acide chlorhydrique, de l'acide sulfurique, de l'acide fluorhydrique, etc., ou un mélange de ceux-ci, avec ou non des cations hydrolysables.

D'autres caractéristiques et avantages de l'invention ressortiront du complément de description qui suit, qui se

rapporte à des essais ayant permis de valider l'invention et qui est donné en référence aux figures annexées.

Il va de soi toutefois que ce complément de description n'est donné qu'à titre d'illustration de l'invention et ne doit en aucun cas être interprété comme une limitation de cet objet.

## Brève description des figures

La figure 1 illustre, à titre d'exemple, le spectre d'intensité lumineuse (notée I et exprimée en coups) acquis au moyen d'une caméra CCD, sur la gamme de longueurs d'onde comprise entre 400 nm et 750 nm, pour une solution A2 comprenant 0,27 mol/L d'oxalate de sodium, de pH 5,7.

La figure 2 illustre, à titre d'exemple, le spectre d'intensité lumineuse (notée I et exprimée en coups) acquis au moyen d'une caméra CCD, sur la gamme de longueur d'onde comprise entre 400 nm et 750 nm, pour une solution A3 obtenue par mélange de 1 000 µL de la solution A2 dont le spectre est montré sur la figure 1 et un échantillon de 50 µL d'une solution aqueuse A1 comprenant 2 mol/L d'acide nitrique et 0,56 mol/L d'uranium(VI).

La figure 3 illustre, à titre d'exemple, le spectre d'intensité lumineuse (notée I et exprimée en coups) acquis au moyen d'une caméra CCD, sur la gamme de longueurs d'onde comprises entre 400 nm et 750 nm, pour une solution A5 obtenue par mélange de la solution A3 dont le spectre d'intensité lumineuse est montré sur la figure 2 et de 150 µL d'une solution aqueuse A4 de vert de bromocrésol à 0,02 % massiques.

La figure 4 illustre, à titre d'exemple, le spectre d'absorbance (notée A et exprimée en unités arbitraires) des cations uranyles présents dans la solution A3, ce spectre ayant été obtenu en prenant le spectre d'intensité lumineuse montré sur la figure 2 comme mesure et le spectre d'intensité lumineuse montré sur la figure 1 comme blanc de mesure.

La figure 5 illustre, à titre d'exemple, le spectre d'absorbance (notée A et exprimée en unités arbitraires) du vert de bromocrésol présent dans la solution A5, ce spectre ayant été obtenu en prenant le spectre d'intensité lumineuse montré sur la figure 3 comme mesure et le spectre d'intensité lumineuse montré sur la figure 2 comme blanc de mesure.

## Exposé détaillé de modes de mise en oeuvre particuliers

Le procédé de l'invention a été validé par des essais visant à vérifier si ce procédé permet de retrouver avec un biais acceptable (idéalement inférieur à 5 %) l'acidité libre, c'est-à-dire l'acidité liée à la seule présence d'acide nitrique, de solutions aqueuses comprenant, outre de l'acide nitrique à une concentration connue, de l'uranium(VI) et/ou du plutonium(IV), également à une concentration connue.

Ces essais ont été réalisés de façon manuelle d'une part, et de façon automatisée d'autre part.

### Exemple I - Essais manuels :

Les essais manuels ont été réalisés à température ambiante (20-25°C) dans des boîtes à gants nucléaires en utilisant :

- comme solution A2 : une solution aqueuse saturée d'oxalate de sodium, comprenant 0,27 mol/L de $Na_2C_2O_4$ et dont le pH a été ajusté à 5,7 par addition d'acide sulfurique ;
- comme solutions A1 à analyser : une série de solutions aqueuses comprenant :
    * de l'acide nitrique à une concentration allant de 1,0 mol/L à 4,99 mol/L, et
    * soit de l'uranium(VI) à une concentration de 33 g/L, 66 g/L ou de 133 g/L, soit du plutonium(IV) à une concentration de 20 g/L;
- comme solution A4 : une solution aqueuse de vert de bromocrésol à 0,02 % ; et
- comme spectrophotomètre : un spectrophotomètre UV-visible SpectraPro SP500i (Roper Scientific) équipé d'une cuve de trajet optique égal à 10 mm.

Chaque essai a été réalisé en utilisant un volume de 1000 µL de solution A2, un volume de 50 µL de solution A1 et un volume de 150 µL de solution A4.

La constante de dissociation acide $K_{HA}$ de l'acide oxalique et la constante de dissociation $K_{HC}$ de la forme acide du vert de bromocrésol dans les conditions des essais ont été préalablement déterminées expérimentalement.

Dans les conditions des essais, $K_{HA}$ est égale à 3,8 tandis que $K_{HC}$ est égale à 4,55.

Les essais ont été réalisés en suivant le protocole opératoire ci-après :

1. introduction du volume de solution A2 dans la cuve de spectrophotométrie et acquisition du spectre d'intensité lumineuse dans l'UV-visible (ici 400 nm- 750 nm) ;
2. ajout dans la cuve de spectrophotométrie du volume de solution A1, mélange de ce volume avec la solution A2 déjà présente dans cette cuve et acquisition du spectre d'intensité lumineuse sur les mêmes longueurs d'onde que précédemment ;
3. ajout dans la cuve de spectrophotométrie du volume de solution A4 et mélange de ce volume avec le mélange solution A2/solution A1 déjà présent dans cette cuve et acquisition du spectre d'intensité lumineuse sur les mêmes longueurs d'onde que précédemment ;
4. détermination du spectre d'absorbance du cation hydrolysable, à savoir $UO_2^{2+}$ dans le cas de l'uranium(VI) et $Pu^{4+}$ dans le cas du plutonium(IV), sur les mêmes longueurs d'onde que précédemment par calcul du logarithme décimal du rapport entre les valeurs d'intensité lumineuse du spectre acquis au point 2 ci-avant et les valeurs d'intensité lumineuse du spectre acquis au point 1 ci-avant ;
5. détermination du spectre d'absorbance du colorant sur les mêmes longueurs d'onde que précédemment par calcul du logarithme décimal du rapport entre les valeurs d'intensité lumineuse du spectre acquis au point 3 ci-avant et les valeurs d'intensité lumineuse du spectre acquis au point 2 ci-avant ;
6. détermination, à partir de l'absorbance maximale observée pour la forme basique du colorant sur le spectre d'absorbance obtenu au point 5 ci-avant et par référence à des courbes étalons précédemment établies, du rapport R entre la concentration de la forme basique du colorant présente dans le mélange solution A2/solution A1/solution A4 et la concentration totale du colorant dans ce mélange ;
7. détermination du pH du mélange solution A2/solution A1/solution A4 au moyen de l'équation (2) précédemment définie, qui devient dans le cas présent :

$$\mathrm{pHA5} = -\log\left(10^{-4,55}\left(\frac{1}{\mathrm{R}} - 1\right)\right);$$

et

8. détermination de l'acidité libre de la solution A1, exprimée en concentration molaire des protons $H^+$, notée $[H^+]$, au moyen de l'équation (3) telle que précédemment définie, qui devient dans le cas présent :

$$[\mathrm{H}^+] = \frac{10^{-\mathrm{pHA5}} \times (5.10^{-5} + 10^{-3}) - 10^{-5,7} \times 10^{-3} + \mathrm{Y}}{5.10^{-5}}$$

et dans laquelle :

pHA5 est le pH du mélange solution A2/solution A1/solution A4 tel que déterminé au point 7 ci-avant, et
Y est déterminé au moyen de l'équation (7) telle que précédemment définie, qui devient dans le cas présent :

$$\mathrm{Y} = \frac{10^{-\mathrm{pHA5}} \times \left([\mathrm{A}^-] \times 10^{-3} - \frac{\mathrm{n}}{\mathrm{m}}\mathrm{C3} \times 5.10^{-5}\right) - 10^{-3,8} \times [\mathrm{HA}] \times 5.10^{-5}}{10^{-3,8} + 10^{-\mathrm{pHA5}}}$$

dans laquelle :

m est égal à 1 et n est égal à 3 car, en fort excès oxalique, les réactions de complexation des cations $UO_2^{2+}$ et $Pu^{4+}$ s'écrivent :

$$UO_2^{2+} + 3C_2O_4^{2-} <=> UO_2(C_2O_4)_3^{4-}$$

$$Pu^{4+} + 3C_2O_4^{2-} <=> Pu(C_2O_4)_3^{2-}$$

C3 représente la concentration en mol/L du cation $UO_2^{2+}$ ou $Pu^{4+}$ dans le mélange solution A2/solution A1/solution A4.

Dans le cadre des présents essais, la concentration C3 n'a pas été obtenue expérimentalement mais a été introduite dans l'équation (7) en prenant la concentration de l'uranium(VI) ou du plutonium(IV) dans la solution A1 analysée.

Le tableau I ci-après présente pour chaque solution A1 analysée :

- sa concentration, exprimée en g/L, en uranium(VI) ou en plutonium(IV),
- sa concentration, exprimée en mol/L, en acide nitrique,
- le pH théoriquement présenté par le mélange solution A2/ solution A1/solution A4 obtenu au point 3 ci-avant (dit « pH théorique »),
- le pH de ce mélange tel que déterminé au point 7 ci-avant (dit « pH mesuré » dans le tableau I),
- l'acidité libre de la solution A1, exprimée en mol/L, telle que déterminée au point 8 ci-avant (dite « acidité libre mesurée » dans le tableau I) ainsi que
- l'écart relatif, exprimé en %, existant entre la concentration de l'acide nitrique dans la solution A1 et l'acidité libre de cette solution.

Tableau I

| Solutions A1 | | | pH théorique | pH mesuré | Acidité libre mesurée (mol/L) | Écart relatif (%) |
|---|---|---|---|---|---|---|
| [Cation] (g/L) | | [$HNO_3$] (mol/L) | | | | |
| U(VI) | 33 | 1,0 | 4,17 | 4,19 | 0,96 | +4,00 |
| | 66 | | 4,12 | 4,11 | 1,01 | -1,00 |
| | 133 | | 4,00 | 4,00 | 1,00 | 0 |
| U(VI) | 33 | 1,5 | 3,94 | 3,93 | 1,51 | -0,66 |
| | 66 | | 3,88 | 3,88 | 1,50 | 0 |
| | 133 | | 3,74 | 3,72 | 1,54 | -2,66 |
| U(VI) | 33 | 2,0 | 3,75 | 3,72 | 2,08 | -3,8 |
| | 66 | | 3,68 | 3,70 | 1,96 | +2,0 |
| | 133 | | 3,50 | 3,51 | 1,99 | +0,50 |
| Pu(IV) | 20 | 3,02 | 4,10 | 4,11 | 3,04 | -0,66 |
| | | 3,93 | 3,95 | 3,98 | 3,85 | +2,03 |
| | | 4,99 | 3,79 | 3,81 | 5,00 | -0,20 |

Ce tableau montre que le procédé de l'invention permet de déterminer l'acidité libre de solutions aqueuses acides comprenant un cation hydrolysable avec un biais par rapport à la vraie valeur de cette acidité au plus de 4 % et ce, quelles que soient les concentrations en acide et en cation hydrolysable de ces solutions.

**Exemple II** - **Essais automatisés** :

Les essais automatisés ont été réalisés à température ambiante (20-25°C) en utilisant un appareil comprenant :

- le même spectrophotomètre que celui utilisé dans les essais manuels décrits dans l'exemple I ci-avant ;
- un dispositif permettant de distribuer dans la cuve du spectrophotomètre, au moyen de micropipettes, les volumes de solutions A2, A1 et A4 nécessaires à la réalisation des essais ; et
- un logiciel de pilotage du dispositif de distribution ainsi qu'un logiciel de traitement et d'analyse des données fournies par les spectres UV-visible acquis au moyen du spectrophotomètre.

Ces essais ont, par ailleurs, été réalisés en utilisant :

- la même solution A2 et la même solution A4 que celles utilisées dans les essais manuels décrits dans l'exemple I ci-avant ; et

- comme solutions A1 à analyser : des solutions aqueuses, dénommées ci-après solutions 1, 2, 3 et 4, comprenant :

  * de l'acide nitrique à une concentration allant de 1,08 mol/L à 10,02 mol/L,

  * de l'uranium(VI) à une concentration allant de 45 g/L à 75 g/L et du plutonium(IV) à une concentration allant de 4 g/L à 7 g/L.

La composition de ces solutions est précisée dans le tableau II ci-après.

Sont également précisés dans ce tableau, pour chaque solution A1 à analyser, le volume de cette solution utilisé ainsi que les volumes de solution A2 et A4 utilisés.

Tableau II

| **Solutions A1** | **[U(VI)]** (g/L) | **[Pu(IV)]** (g/L) | **[$HNO_3$]** (mol/L) | **Vol. solution A1** (µL) | **Vol. solution A2** (µL) | **Vol. solution A4** (µL) |
|---|---|---|---|---|---|---|
| **1** | 75 | 4 | 1,08 | 30 | 770 | 100 |
| **2** | 65 | 5 | 3,23 | 20 | 780 | 100 |
| **3** | 55 | 6 | 7,04 | 10 | 790 | 100 |
| **4** | 45 | 7 | 10,02 | 10 | 790 | 100 |

Toutes les solutions A1 ont été analysées en duplicate en suivant le même protocole opératoire que celui décrit dans l'exemple I ci-avant, à ceci près que les concentrations des cations uranyle $UO_2^{2+}$ et $Pu^{4+}$ dans chacun des mélanges solution A2/solution A1/solution A4 ont été déterminées à partir du spectre d'absorbance obtenu au point 4 de ce protocole, par référence à des courbes étalons préalablement établies.

Comme précédemment, l'acidité libre des solutions A1, exprimée en concentration molaire des protons $H^+$, notée [$H^+$], a été déterminée au moyen de l'équation (3) telle que précédemment définie.

Le tableau III ci-après présente pour chaque solution A1 analysée et chaque duplicate de cette solution :

- la concentration de l'uranium(VI) et la concentration du plutonium(IV) dans la solution A1 telles que déterminées à partir du spectre d'absorbance obtenu au point 4 du protocole opératoire, ces concentrations étant exprimées en g/L,
- le pH théoriquement présenté par le mélange solution A2/solution A1/solution A4 obtenu au point 3 du protocole opératoire (dit « pH théorique »),
- le pH de ce mélange tel que déterminé au point 7 du protocole opératoire (dit « pH mesuré » dans le tableau III),
- l'acidité libre de la solution A1, exprimée en mol/L, telle que déterminée au point 8 du protocole opératoire (dite « acidité libre mesurée » dans le tableau III), ainsi que
- l'écart relatif, exprimé en %, existant entre la concentration de l'acide nitrique dans la solution A1 et l'acidité libre de cette solution.

Tableau III

| **Solutions A1** | **[U(VI)] mesurée** (g/L) | **[Pu(IV)] mesurée** (g/L) | **pH théorique** | **pH mesuré** | **Acidité libre mesurée** (mol/L) | **Écart relatif** (%) |
|---|---|---|---|---|---|---|
| **1** | 81,5 | 5,3 | 4,333 | 4,342 | 1,066 | +1,28 |
| | 82,9 | 5,1 | | 4,344 | 1,063 | +1,54 |
| **2** | 73,6 | 7,2 | 4,015 | 4,023 | 3,193 | +1,14 |
| | 76,3 | 7,0 | | 4,018 | 3,220 | +0,30 |
| **3** | 52,8 | 8,1 | 4,057 | 4,054 | 7,081 | -0,58 |
| | 55,8 | 7,9 | | 4,052 | 7,100 | -0,85 |
| **4** | 44,1 | 9,3 | 3,829 | 3,833 | 9,981 | +0,39 |
| | 40,9 | 9,5 | | 3,839 | 9,889 | +1,31 |

Ce tableau montre que le procédé de l'invention, lorsqu'il est mis en oeuvre de façon automatisée, permet de déterminer l'acidité libre de solutions aqueuses acides comprenant des cations hydrolysables avec un biais par rapport à la vraie valeur de cette acidité inférieur à 2 % et ce, quelles que soient les concentrations en acide et en cations hydrolysables de ces solutions.

**Références citées**

[1] T. G. Srinivasan et P. R. Rao, Talanta 2014, 118, 162-171
[2] J. Néri-Quiroz et al., Talanta 2016, 159, 330-335

**Revendications**

1. Procédé de détermination de l'acidité totale d'une solution aqueuse A1 comprenant un acide fort ou un mélange d'acides forts, qui comprend au moins les étapes suivantes :

   a) fourniture d'une solution aqueuse A5 par mélange :

   - d'un volume V1 de la solution A1,
   - d'un volume V2 d'une solution aqueuse A2 de pH noté pHA2, comprenant un composé choisi parmi un acide faible, une base faible, un sel d'un acide faible ou un sel d'une base faible, et
   - d'un volume V4 d'une solution A4 comprenant un colorant sensible au pH, ayant une forme acide et une forme basique, et une zone de virage comprise entre un premier pH et un deuxième pH, le deuxième pH étant supérieur au premier pH mais inférieur à pHA2 ;

   b) détermination du spectre d'absorbance UV-visible du colorant présent dans la solution A5 en prenant la solution A2 comme blanc de mesure ;
   c) détermination de la concentration de l'une au moins des formes acide et basique du colorant dans la solution A5 à partir du spectre d'absorbance obtenu à l'étape b) ;
   d) détermination du pH, noté pHA5, de la solution A5 à partir de la concentration déterminée à l'étape c) ; et
   e) détermination de l'acidité totale de la solution A1 à partir du pHA5 déterminé à l'étape d) ;

   et dans lequel pHA2 est tel qu'un mélange de volumes V1 et V2 ait un pH qui se situe dans la zone de virage du colorant.

2. Procédé selon La revendication 1, dans lequel l'étape b) comprend :

   - une acquisition du spectre d'intensité lumineuse de la solution A2 dans le domaine UV-visible ;
   - une acquisition du spectre d'intensité lumineuse de la solution A5 dans le domaine UV-visible ; et
   - un calcul du logarithme décimal du rapport entre les valeurs d'intensité lumineuse du spectre acquis pour la solution A5 et les valeurs d'intensité lumineuse du spectre acquis pour la solution A2.

3. Procédé selon la revendication 2, dans lequel la concentration de l'une au moins des formes acide et basique du colorant dans la solution A5 est déterminée en appliquant la loi de Beer-Lambert.

4. Procédé selon l'une quelconque des revendications 1 à 3, dans lequel pHA5 est déterminé au moyen de l'équation (1) :

$$10^{-\mathrm{pHA5}} = \frac{K_{HC} \times [HC]}{[C^-]} \quad (1)$$

   dans laquelle :

$K_{HC}$ est la constante de dissociation de la forme acide du colorant dans la solution A5 ;
[HC] est la concentration de la forme acide du colorant dans la solution A5 en mol/L ; et
$[C^-]$ est la concentration de la forme basique du colorant dans la solution A5 en mol/L.

**5.** Procédé selon l'une quelconque des revendications 1 à 3, dans lequel pHA5 est déterminé au moyen de l'équation (2) :

$$\mathrm{pHA5} = -\log\left(\mathrm{K_{HC}}\left(\frac{1}{\mathrm{R}} - 1\right)\right)$$

(2)

dans laquelle :

$K_{HC}$ est la constante de dissociation de la forme acide du colorant dans la solution A5 ; et
R est le rapport entre la concentration de la forme basique du colorant dans la solution A5 et la concentration du colorant dans cette solution.

**6.** Procédé selon l'une quelconque des revendications 1 à 5, dans lequel l'acidité totale de la solution A1, exprimée en concentration molaire des protons $H^+$, notée $[H^+]$, est déterminée au moyen de l'équation (3) :

$$[\mathrm{H^+}] = \frac{10^{-\mathrm{pHA5}} \times (\mathrm{V1} + \mathrm{V2}) - 10^{-\mathrm{pHA2}} \times \mathrm{V2} + \mathrm{Y}}{\mathrm{V1}}$$

(3)

dans laquelle :

V1 et V2 sont exprimés en L ; et
Y est déterminé au moyen de l'équation (4) :

$$\mathrm{Y} = \frac{10^{-\mathrm{pHA5}} \times [\mathrm{A^-}] \times \mathrm{V2} - \mathrm{K_{HA}} \times [\mathrm{HA}] \times \mathrm{V2}}{\mathrm{K_{HA}} + 10^{-\mathrm{pHA5}}}$$

(4)

dans laquelle :

$K_{HA}$ est la constante de dissociation acide de l'acide faible dans la solution A5 ou de l'acide conjugué de la base faible dans la solution A5 ;
$[A^-]$ est la concentration de la base conjuguée de l'acide faible dans la solution A2 ou de la base faible dans la solution A5 en mol/L ;
[HA] est la concentration de l'acide faible dans la solution A2 ou de l'acide conjugué de la base faible dans la solution A5 en mol/L ; et
V2 est exprimé en L.

**7.** Procédé de détermination de l'acidité libre d'une solution aqueuse A1 comprenant un acide fort ou un mélange d'acides forts et un ou plusieurs cations hydrolysables, qui comprend au moins les étapes suivantes :

a) fourniture d'une solution aqueuse A3 par mélange d'un volume V1 de la solution A1 et d'un volume V2 d'une solution aqueuse A2 de pH noté pHA2, comprenant un composé choisi parmi un acide faible, une base faible, un sel d'un acide faible ou un sel d'une base faible, et un agent complexant le(s) cation(s) hydrolysable(s) à une concentration C2 ;

b) détermination du spectre d'absorbance UV-visible du (des) cation(s) hydrolysable(s) présent(s) dans la solution A3 en prenant la solution A2 comme blanc de mesure ;
c) détermination de la concentration C3 du (des) cation(s) hydrolysable(s) dans la solution A3 à partir du spectre d'absorbance obtenu à l'étape b) ;
d) fourniture d'une solution aqueuse A5 par mélange de la solution A3 et d'un volume V4 d'une solution A4 comprenant un colorant sensible au pH, ayant une forme acide et une forme basique, et une zone de virage comprise entre un premier pH et un deuxième pH, le deuxième pH étant supérieur au premier pH mais inférieur à pHA2 ;
e) détermination du spectre d'absorbance UV-visible du colorant présent dans la solution A5 en prenant la solution A2 ou la solution A3 comme blanc de mesure ;
f) détermination de la concentration de l'une au moins des formes acide et basique du colorant dans la solution A5 à partir du spectre d'absorbance obtenu à l'étape e) ;
g) détermination du pH, noté pHA5, de la solution A5 à partir de la concentration déterminée à l'étape f) ; puis
h) détermination de l'acidité libre de la solution A1 à partir de la concentration C3 déterminée à l'étape c) et du pHA5 déterminé à l'étape e) ;

et dans lequel :

pHA2 et les volumes V1 et V2 sont tels que la solution A3 a un pH noté pHA3, qui se situe dans la zone de virage du colorant ;
la concentration C2 et les volumes V1 et V2 sont tels que l'agent complexant est en excès par rapport au(x) cation(s) hydrolysable(s) dans la solution A3.

**8.** Procédé selon la revendication 7, dans lequel l'étape b) comprend :

- une acquisition du spectre d'intensité lumineuse de la solution A2 dans le domaine UV-visible ;
- une acquisition du spectre d'intensité lumineuse de la solution A3 dans le domaine UV-visible ; et
- un calcul du logarithme décimal du rapport entre les valeurs d'intensité lumineuse du spectre acquis pour la solution A3 et les valeurs d'intensité lumineuse du spectre acquis pour la solution A2

**9.** Procédé selon la revendication 8, dans lequel la concentration C3 du (des) cation(s) hydrolysable(s) est déterminée en appliquant la loi de Beer-Lambert.

**10.** Procédé selon la revendication 8 ou la revendication 9, dans lequel l'étape e) comprend :

- une acquisition du spectre d'intensité lumineuse de la solution A5 dans le domaine UV-visible ; et
- un calcul du logarithme décimal du rapport entre les valeurs d'intensité lumineuse du spectre acquis pour la solution A5 et les valeurs d'intensité lumineuse du spectre acquis pour la solution A3.

**11.** Procédé selon la revendication 10, dans lequel la concentration de l'une au moins des formes acide et basique du colorant dans la solution A5 est déterminée en appliquant la loi de Beer-Lambert.

**12.** Procédé selon l'une quelconque des revendications 7 à 11, dans lequel pHA5 est déterminé au moyen de l'équation (1) :

$$10^{-\mathrm{pHA5}} = \frac{K_{HC} \times [HC]}{[C^-]} \quad (1)$$

dans laquelle :

$K_{HC}$ est la constante de dissociation de la forme acide du colorant dans la solution A5 ;
[HC] est la concentration de la forme acide du colorant dans la solution A5 en mol/L ; et
$[C^-]$ est la concentration de la forme basique du colorant dans la solution A5 en mol/L.

**13.** Procédé selon l'une quelconque des revendications 7 à 11, dans lequel pHA5 est déterminé au moyen de l'équation

(2) :

$$pHA5 = -\log\left(K_{HC}\left(\frac{1}{R} - 1\right)\right)$$

(2)

dans laquelle :

$K_{HC}$ est la constante de dissociation de la forme acide du colorant dans la solution A5 ; et
R est le rapport entre la concentration de la forme basique du colorant dans la solution A5 et la concentration du colorant dans cette solution.

**14.** Procédé selon l'une quelconque des revendications 7 à 12, dans lequel l'acidité libre de la solution A1, exprimée en concentration molaire des protons $H^+$, notée $[H^+]$, est déterminée au moyen de l'équation (3) :

$$[H^+] = \frac{10^{-pHA5} \times (V1 + V2) - 10^{-pHA2} \times V2 + Y}{V1}$$

(3)

dans laquelle :

V1 et V2 sont exprimés en L ; et
Y est déterminé au moyen de l'équation (7) :

$$Y = \frac{10^{-pHA5} \times \left([A^-] \times V2 - \frac{n}{m} C3 \times V1\right) - K_{HA} \times [HA]_1 \times V_1}{K_{HA} + 10^{-pHA5}}$$

(7)

dans laquelle :

m est le coefficient stoechiométrique du (des) cation(s) hydrolysable(s) dans la réaction de complexation de ce(s) cation(s) par l'agent complexant ;
n est le coefficient stoechiométrique de l'agent complexant dans la réaction de complexation du (des) cation(s) hydrolysable(s) par cet agent ;
$K_{HA}$ est la constante de dissociation acide de l'acide faible dans la solution A5 ou de l'acide conjugué de la base faible dans la solution A5 ;
$[A^-]$ est la concentration de la base conjuguée de l'acide faible dans la solution A2 ou de la base faible dans la solution A5 en mol/L ;
[HA] est la concentration de l'acide faible dans la solution A2 ou de l'acide conjugué de la base faible dans la solution A5 en mol/L ;
V1 et V2 sont exprimés en L et C3 étant exprimés en mol/L.

**15.** Procédé selon l'une quelconque des revendications 1 à 14, dans lequel la solution A2 comprend un acide faible ou un sel d'un acide faible, de préférence de l'acide oxalique ou un sel de celui-ci.

**16.** Procédé selon l'une quelconque des revendications 1 à 15, dans lequel la solution A1 est une solution aqueuse d'acide nitrique.

**Patentansprüche**

**1.** Verfahren zum Bestimmen des Gesamtsäuregehalts einer wässrigen Lösung A1, die eine starke Säure oder eine Mischung starker Säuren umfasst, das mindestens die folgenden Schritte umfasst:

a) Bereitstellen einer wässrigen Lösung A5 durch Mischen von:

- einem Volumen V1 der Lösung A1,
- einem Volumen V2 einer wässrigen Lösung A2 mit dem pH-Wert pHA2, umfassend eine Verbindung, die aus einer schwachen Säure, einer schwachen Base, einem Salz einer schwachen Säure oder einem Salz einer schwachen Base ausgewählt ist, und
- einem Volumen V4 einer Lösung A4, umfassend einen pH-empfindlichen Farbstoff, der eine Säureform und eine Basisform aufweist, und einen Übergangsbereich zwischen einem ersten pH-Wert und einem zweiten pH-Wert, wobei der zweite pH-Wert höher als der erste pH-Wert, aber niedriger als pHA2 ist;

b) Bestimmen des UV-sichtbaren Absorptionsspektrums des in Lösung A5 vorhandenen Farbstoffs, indem die Lösung A2 als Leerwert verwendet wird;
c) Bestimmen der Konzentration von mindestens einer der Säure- und Basisformen des Farbstoffs in der Lösung A5 aus dem in Schritt b) ermittelten Absorptionsspektrum;
d) Bestimmen des pH-Wertes, bezeichnet als pHA5, der Lösung A5 aus der in Schritt c) bestimmten Konzentration; und
e) Bestimmen des Gesamtsäuregehalts der Lösung A1 aus dem in Schritt d) bestimmten pHAS;

und wobei pHA2 so beschaffen ist, dass eine Mischung aus den Volumen V1 und V2 einen pH-Wert aufweist, der im Übergangsbereich des Farbstoffs liegt.

**2.** Verfahren nach Anspruch 1, wobei Schritt b) folgendes umfasst:

- Erfassen des Lichtintensitätsspektrums der Lösung A2 im UV-sichtbaren Bereich;
- Erfassen des Lichtintensitätsspektrums der Lösung A5 im UV-sichtbaren Bereich; und
- Berechnen des dezimalen Logarithmus des Verhältnisses zwischen den Lichtintensitätswerten des erfassten Spektrums für die Lösung A5 und den Lichtintensitätswerten des erfassten Spektrums für die Lösung A2.

**3.** Verfahren nach Anspruch 2, wobei die Konzentration von mindestens einer der Säure- und Basisformen des Farbstoffs in der Lösung A5 durch Anwenden des Beer-Lambertschen Gesetzes bestimmt wird.

**4.** Verfahren nach einem der Ansprüche 1 bis 3, wobei pHA5 mittels der Gleichung (1) bestimmt wird:

$$10^{-\mathrm{pHA5}} = \frac{K_{HC} \times [HC]}{[C^-]} \quad (1)$$

wobei:

$K_{HC}$ die Dissoziationskonstante der Säureform des Farbstoffs in der Lösung A5 ist;
[HC] die Konzentration der Säureform des Farbstoffs in der Lösung A5 in mol/l ist; und
$[C^-]$ die Konzentration der Basisform des Farbstoffs in der Lösung A5 in mol/l ist.

**5.** Verfahren nach einem der Ansprüche 1 bis 3, wobei pHA5 mittels der Gleichung (2) bestimmt wird:

$$pHA5 = -\log\left(K_{HC}\left(\frac{1}{R} - 1\right)\right)$$

(2)

wobei:

$K_{HC}$ die Dissoziationskonstante der Säureform des Farbstoffs in der Lösung A5 ist; und
R das Verhältnis zwischen der Konzentration der Basisform des Farbstoffs in der Lösung A5 und der Konzentration des Farbstoffs in dieser Lösung ist.

**6.** Verfahren nach einem der Ansprüche 1 bis 5, wobei der Gesamtsäuregehalt der Lösung A1, ausgedrückt in einer molaren Konzentration von $H^+$-Protonen, bezeichnet als $[H^+]$, mittels der Gleichung (3) bestimmt wird:

$$[H^+] = \frac{10^{-pHA5} \times (V1 + V2) - 10^{-pHA2} \times V2 + Y}{V1}$$

(3)

wobei:

V1 und V2 in L ausgedrückt sind; und
Y mittels der Gleichung (4) bestimmt wird:

$$Y = \frac{10^{-pHA5} \times [A^-] \times V2 - K_{HA} \times [HA] \times V2}{K_{HA} + 10^{-pHA5}}$$

(4)

wobei:

$K_{HA}$ die Säuredissoziationskonstante der schwachen Säure in der Lösung A5 oder der konjugierten Säure der schwachen Base in der Lösung A5 ist;
$[A^-]$ die Konzentration der konjugierten Base der schwachen Säure in der Lösung A2 oder der schwachen Base in der Lösung A5 in mol/l ist;
[HA] die Konzentration der schwachen Säure in der Lösung A2 oder der konjugierten Säure der schwachen Base in der Lösung A5 in mol/l ist; und
V2 in L ausgedrückt wird.

**7.** Verfahren zum Bestimmen des freien Säuregehalts einer wässrigen Lösung A1, die eine starke Säure oder eine Mischung von starken Säuren und ein oder mehrere hydrolysierbare Kationen umfasst, das mindestens die folgenden Schritte umfasst:

a) Bereitstellen einer wässrigen Lösung A3 durch Mischen eines Volumens V1 der Lösung A1 und eines Volumens V2 einer wässrigen Lösung A2 mit dem pH-Wert pHA2, umfassend eine Verbindung, ausgewählt aus einer schwachen Säure, einer schwachen Base, einem Salz einer schwachen Säure oder einem Salz einer schwachen Base, und ein Mittel, das das/die hydrolysierbare(n) Kation(en) in einer Konzentration C2 komplexiert;
b) Bestimmen des UV-sichtbaren Absorptionsspektrums des/der in der Lösung A3 vorhandenen hydrolysierbaren Kations/Kationen, indem Sie die Lösung A2 als Leerwert verwenden;
c) Bestimmen der Konzentration C3 des/der hydrolysierbaren Kations/Kationen in der Lösung A3 aus dem in Schritt b) ermittelten Absorptionsspektrum;
d) Bereitstellen einer wässrigen Lösung A5 durch Mischen der Lösung A3 und eines Volumens V4 einer Lösung

A4, umfassend einen pH-empfindlichen Farbstoff, der eine Säureform und eine Basisform und einen Übergangsbereich zwischen einem ersten pH und einem zweiten pH aufweist, wobei der zweite pH höher als der erste pH, aber niedriger als pHA2 ist;
e) Bestimmen des UV-sichtbaren Absorptionsspektrums des in der Lösung A5 vorhandenen Farbstoffs, indem Sie die Lösung A2 oder die Lösung A3 als Leerwert verwenden;
f) Bestimmen der Konzentration von mindestens einer der Säure- und Basenformen des Farbstoffs in der Lösung A5 aus dem in Schritt e) erhaltenen Absorptionsspektrum;
g) Bestimmen des pH-Wertes, bezeichnet als pHA5, der Lösung A5 aus der in Schritt f) bestimmten Konzentration; dann
h) Bestimmen des freien Säuregehalts der Lösung A1 aus der in Schritt c) bestimmten Konzentration C3 und dem in Schritt e) bestimmten pHAS;

und wobei:

pHA2 und die Volumina V1 und V2 so gewählt sind, dass die Lösung A3 einen pH-Wert, bezeichnet als pHA3, aufweist, der im Bereich des Farbstoffübergangs liegt;
die Konzentration C2 und die Volumen V1 und V2 so gewählt sind, dass das komplexe Mittel in Bezug auf das/die hydrolysierbare(n) Kation(en) in der Lösung A3 im Überschuss vorliegt.

**8.** Verfahren nach Anspruch 7, wobei Schritt b) folgendes umfasst:

- Erfassen des Lichtintensitätsspektrums der Lösung A2 im UV-sichtbaren Bereich;
- Erfassen des Lichtintensitätsspektrums der Lösung A3 im UV-sichtbaren Bereich; und
- Berechnen des dezimalen Logarithmus des Verhältnisses zwischen den Lichtintensitätswerten des erfassten Spektrums für die Lösung A3 und den Lichtintensitätswerten des erfassten Spektrums für die Lösung A2.

**9.** Verfahren nach Anspruch 8, wobei die Konzentration C3 des/der hydrolysierbaren Kations/Kationen durch Anwendung des Beer-Lambertschen Gesetzes bestimmt wird.

**10.** Verfahren nach Anspruch 8 oder Anspruch 9, wobei Schritt e) folgendes umfasst:

- Erfassen des Lichtintensitätsspektrums der Lösung A5 im UV-sichtbaren Bereich; und
- Berechnen des dezimalen Logarithmus des Verhältnisses zwischen den Lichtintensitätswerten des erfassten Spektrums für die Lösung A5 und den Lichtintensitätswerten des erfassten Spektrums für die Lösung A3.

**11.** Verfahren nach Anspruch 10, wobei die Konzentration von mindestens einerder Säure- und Basisformen des Farbstoffs in der Lösung A5 durch Anwenden des Beer-Lambertschen Gesetzes bestimmt wird.

**12.** Verfahren nach einem der Ansprüche 7 bis 11, wobei pHA5 mittels der Gleichung (1) bestimmt wird:

$$10^{-\mathrm{pHA5}} = \frac{K_{HC} \times [HC]}{[C^-]} \quad (1)$$

wobei:

$K_{HC}$ die Dissoziationskonstante der Säureform des Farbstoffs in der Lösung A5 ist;
[HC] die Konzentration der Säureform des Farbstoffs in der Lösung A5 in mol/l ist; und
$[C^-]$ die Konzentration der Basisform des Farbstoffs in der Lösung A5 in mol/l ist.

**13.** Verfahren nach einem der Ansprüche 7 bis 11, wobei pHA5 mittels der Gleichung (2) bestimmt wird:

$$pHA5 = -\log\left(K_{HC}\left(\frac{1}{R} - 1\right)\right)$$

(2)

wobei:

$K_{HC}$ die Dissoziationskonstante der Säureform des Farbstoffs in der Lösung A5 ist; und
R das Verhältnis zwischen der Konzentration der Basisform des Farbstoffs in der Lösung A5 und der Konzentration des Farbstoffs in dieser Lösung ist.

**14.** Verfahren nach einem der Ansprüche 7 bis 12, wobei der freie Säuregehalt der Lösung A1, ausgedrückt als molare Konzentration von $H^+$-Protonen, bezeichnet als $[H^+]$, mittels der Gleichung (3) bestimmt wird:

$$[H^+] = \frac{10^{-pHA5} \times (V1 + V2) - 10^{-pHA2} \times V2 + Y}{V1}$$

(3)

wobei:

V1 und V2 in L ausgedrückt sind; und
Y mittels der Gleichung (7) bestimmt wird:

$$Y = \frac{10^{-pHA5} \times \left([A^-] \times V2 - \frac{n}{m}C3 \times V1\right) - K_{HA} \times [HA]_1 \times V_1}{K_{HA} + 10^{-pHA5}}$$

(7)

wobei:

m der stöchiometrische Koeffizient des/der hydrolysierbaren Kations/Kationen bei der Komplexierungsreaktion dieses/r Kations/Kationen durch das komplexe Mittel ist;
n der stöchiometrische Koeffizient des komplexen Mittels bei der Komplexierungsreaktion des/der hydrolysierbaren Kations/Kationen durch dieses Mittel ist;
$K_{HA}$ die Säuredissoziationskonstante der schwachen Säure in der Lösung A5 oder der konjugierten Säure der schwachen Base in der Lösung A5 ist;
$[A^-]$ die Konzentration der konjugierten Base der schwachen Säure in der Lösung A2 oder der schwachen Base in der Lösung A5 in mol/l ist;
[HA] die Konzentration der schwachen Säure in der Lösung A2 oder der konjugierten Säure der schwachen Base in der Lösung A5 in mol/l ist;
V1 und V2 in L und C3 in mol/l ausgedrückt werden.

**15.** Verfahren nach einem der Ansprüche 1 bis 14, wobei die Lösung A2 eine schwache Säure oder ein Salz einer schwachen Säure, vorzugsweise Oxalsäure oder ein Salz davon, enthält.

**16.** Verfahren nach einem der Ansprüche 1 bis 15, wobei die Lösung A1 eine wässrige Lösung von Stickstoffsäure ist.

## Claims

**1.** Method for determining the total acidity of an aqueous solution A1 comprising a strong acid or a mixture of strong acids, which comprises at least the following steps:

a) providing an aqueous solution A5 by mixing:

- a volume V1 of the solution A1,
- a volume V2 of an aqueous solution A2 of pH denoted pHA2, comprising a compound selected from a weak acid, a weak base, a salt of a weak acid or a salt of a weak base, and
- a volume V4 of a solution A4 comprising a pH-sensitive dye having an acid form and a base form, and a transition range between a first pH and a second pH, the second pH being higher than the first pH but lower than pHA2;

b) determining the UV-visible absorbance spectrum of the dye present in solution A5 by using the solution A2 as a measuring blank;
c) determining the concentration of at least one of the acid and base forms of the dye in the solution A5 from the absorbance spectrum obtained in step b);
d) determining the pH, denoted pHA5, of the solution A5 from the concentration determined in step c); and
e) determining the total acidity of the solution A1 from the pHA5 determined in step d);

and wherein pHA2 is such that a mixture of the volumes V1 and V2 has a pH which is in the transition range of the dye.

**2.** Method according to claim 1, wherein step b) comprises:

- acquiring the light intensity spectrum of the solution A2 in the UV-visible range;
- acquiring the light intensity spectrum of the solution A5 in the UV-visible range; and
- calculating the decimal logarithm of the ratio between the light intensity values of the acquired spectrum for the solution A5 and the light intensity values of the acquired spectrum for the solution A2.

**3.** Method according to claim 2, wherein the concentration of at least one of the acid and base forms of the dye in the solution A5 is determined by applying the Beer-Lambert law.

**4.** Method according to any of claims 1 to 3, wherein pHA5 is determined by means of equation (1):

$$10^{-\mathrm{pHA5}} = \frac{\mathrm{K_{HC}} \times [\mathrm{HC}]}{[\mathrm{C^-}]}$$

(1)

wherein:

$K_{HC}$ is the dissociation constant of the acid form of the dye in the solution A5;
[HC] is the concentration of the acid form of the dye in the solution A5 in mol/L; and
$[C^-]$ is the concentration of the base form of the dye in the solution A5 in mol/L.

**5.** Method according to any of claims 1 to 3, wherein pHA5 is determined by means of equation (2):

$$\mathrm{pHA5} = -\log\left(\mathrm{K_{HC}}\left(\frac{1}{\mathrm{R}} - 1\right)\right)$$

(2)

wherein:

$K_{HC}$ is the dissociation constant of the acid form of the dye in the solution A5; and
R is the ratio between the concentration of the base form of the dye in the solution A5 and the concentration of the dye in this solution.

**6.** Method according to any of claims 1 to 5, wherein the total acidity of the solution A1, expressed in a molar concentration of $H^+$ protons, denoted $[H^+]$, is determined by means of equation (3):

$$[H^+] = \frac{10^{-pHA5} \times (V1 + V2) - 10^{-pHA2} \times V2 + Y}{V1}$$

(3)

wherein:

V1 and V2 are expressed in L; and
Y is determined by means of equation (4):

$$Y = \frac{10^{-pHA5} \times [A^-] \times V2 - K_{HA} \times [HA] \times V2}{K_{HA} + 10^{-pHA5}}$$

(4)

wherein:

$K_{HA}$ is the acid dissociation constant of the weak acid in the solution A5 or of the conjugate acid of the weak base in the solution A5;
$[A^-]$ is the concentration of the conjugate base of the weak acid in the solution A2 or of the weak base in the solution A5 in mol/L;
[HA] is the concentration of the weak acid in the solution A2 or of the conjugate acid of the weak base in the solution A5 in mol/L; and
V2 is expressed in L.

**7.** Method for determining the free acidity of an aqueous solution A1 comprising a strong acid or a mixture of strong acids and one or more hydrolysable cations, which comprises at least the following steps:

a) providing an aqueous solution A3 by mixing a volume V1 of the solution A1 and a volume V2 of an aqueous solution A2 of pH denoted pHA2, comprising a compound selected from a weak acid, a weak base, a salt of a weak acid or a salt of a weak base, and an agent complexing the hydrolysable cation(s) at a concentration C2;
b) determining the UV-visible absorbance spectrum of the hydrolysable cation(s) present in the solution A3 by using the solution A2 as a measuring blank;
c) determining the concentration C3 of the hydrolysable cation(s) in the solution A3 from the absorbance spectrum obtained in step b);
d) providing an aqueous solution A5 by mixing the solution A3 and a volume V4 of a solution A4 comprising a pH-sensitive dye having an acid form and a base form, and a transition range between a first pH and a second pH, the second pH being higher than the first pH but lower than pHA2;
e) determining the UV-visible absorbance spectrum of the dye present in the solution A5 by using the solution A2 or the solution A3 as a measuring blank;
f) determining the concentration of at least one of the acid and base forms of the dye in the solution A5 from the absorbance spectrum obtained in step e);
g) determining the pH, denoted pHA5, of the solution A5 from the concentration determined in step f); then
h) determining the free acidity of the solution A1 from the concentration C3 determined in step c) and from the pHA5 determined in step e);

and wherein:

pHA2 and the volumes V1 and V2 are such that the solution A3 has a pH, denoted pHA3, which is within the dye transition range;
the concentration C2 and the volumes V1 and V2 are such that the complexing agent is in excess with respect to the hydrolysable cation(s) in the solution A3.

**8.** Method according to claim 7, wherein step b) comprises:

- acquiring the light intensity spectrum of the solution A2 in the UV-visible range;
- acquiring the light intensity spectrum of the solution A3 in the UV-visible range; and
- calculating the decimal logarithm of the ratio between the light intensity values of the acquired spectrum for the solution A3 and the light intensity values of the acquired spectrum for the solution A2.

**9.** Method according to claim 8, wherein the concentration C3 of the hydrolysable cation(s) is determined by applying the Beer-Lambert law.

**10.** Method according to claim 8 or claim 9, wherein step e) comprises:

- acquiring the light intensity spectrum of the solution A5 in the UV-visible range; and
- calculating the decimal logarithm of the ratio between the light intensity values of the acquired spectrum for the solution A5 and the light intensity values of the acquired spectrum for the solution A3.

**11.** Method according to claim 10, wherein the concentration of at least one of the acid and base forms of the dye in the solution A5 is determined by applying the Beer-Lambert law.

**12.** Method according to any of claims 7 to 11, wherein pHA5 is determined by means of equation (1):

$$10^{-\mathrm{pHA5}} = \frac{K_{HC} \times [HC]}{[C^-]} \tag{1}$$

wherein:

$K_{HC}$ is the dissociation constant of the acid form of the dye in the solution A5;
[HC] is the concentration of the acid form of the dye in the solution A5 in mol/L; and
$[C^-]$ is the concentration of the base form of the dye in the solution A5 in mol/L.

**13.** Method according to any of claims 7 to 11, wherein pHA5 is determined by means of equation (2):

$$\mathrm{pHA5} = -\log\left(K_{HC}\left(\frac{1}{R} - 1\right)\right) \tag{2}$$

wherein:

$K_{HC}$ is the dissociation constant of the acid form of the dye in the solution A5; and
R is the ratio between the concentration of the base form of the dye in the solution A5 and the concentration of the dye in this solution.

**14.** Method according to any of claims 7 to 12, wherein the free acidity of solution A1, expressed in molar concentration of $H^+$ protons, denoted $[H^+]$, is determined by means of equation (3):

$$[H^+] = \frac{10^{-\mathrm{pHA5}} \times (V1 + V2) - 10^{-\mathrm{pHA2}} \times V2 + Y}{V1} \tag{3}$$

wherein:

V1 and V2 are expressed in L; and
Y is determined by means of equation (7):

$$Y = \frac{10^{-pHA5} \times \left([A^-] \times V2 - \frac{n}{m} C3 \times V1\right) - K_{HA} \times [HA]_1 \times V_1}{K_{HA} + 10^{-pHA5}} \quad (7)$$

wherein:

m is the stoichiometric coefficient of the hydrolysable cation(s) in the complexing reaction of these cation(s) by the complexing agent;
n is the stoichiometric coefficient of the complexing agent in the complexing reaction of the hydrolysable cation(s) by this agent;
$K_{HA}$ is the acid dissociation constant of the weak acid in the solution A5 or of the conjugate acid of the weak base in the solution A5;
$[A^-]$ is the concentration of the conjugate base of the weak acid in the solution A2 or of the weak base in the solution A5 in mol/L;
[HA] is the concentration of the weak acid in the solution A2 or of the conjugate acid of the weak base in the solution A5 in mol/L;
V1 and V2 are expressed in L and C3 is expressed in mol/L.

**15.** Method according to any of claims 1 to 14, wherein the solution A2 comprises a weak acid or a salt of a weak acid, preferably oxalic acid or a salt thereof.

**16.** Method according to any of claims 1 to 15, wherein the solution A1 is an aqueous solution of nitric acid.

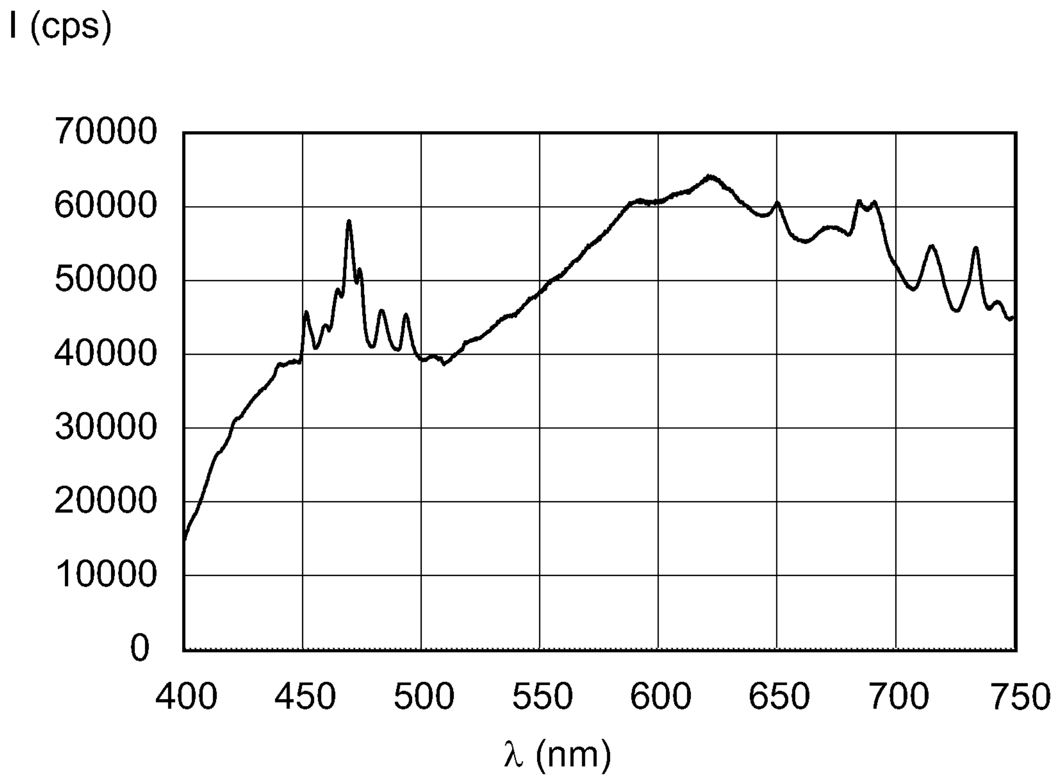
I (cps)
70000
60000
50000
40000
30000
20000
10000
0
400
450
500
550
600
650
700
750
λ (nm)

FIG. 1

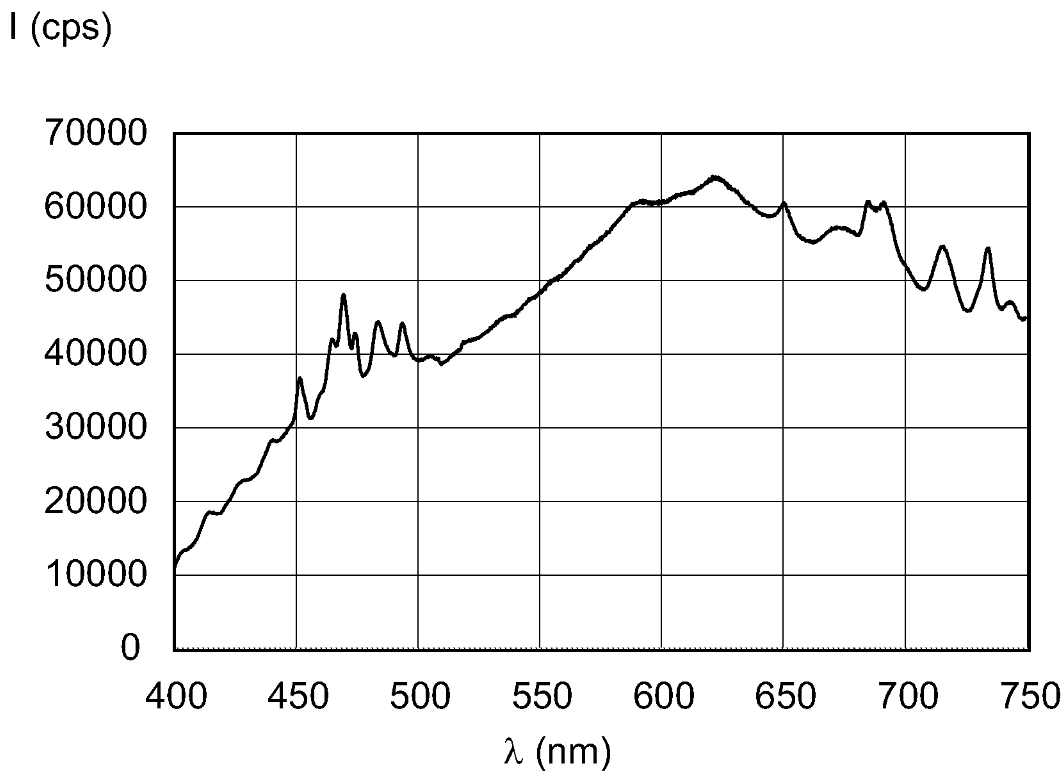
I (cps)
70000
60000
50000
40000
30000
20000
10000
0
400
450
500
550
600
650
700
750
λ (nm)

FIG. 2

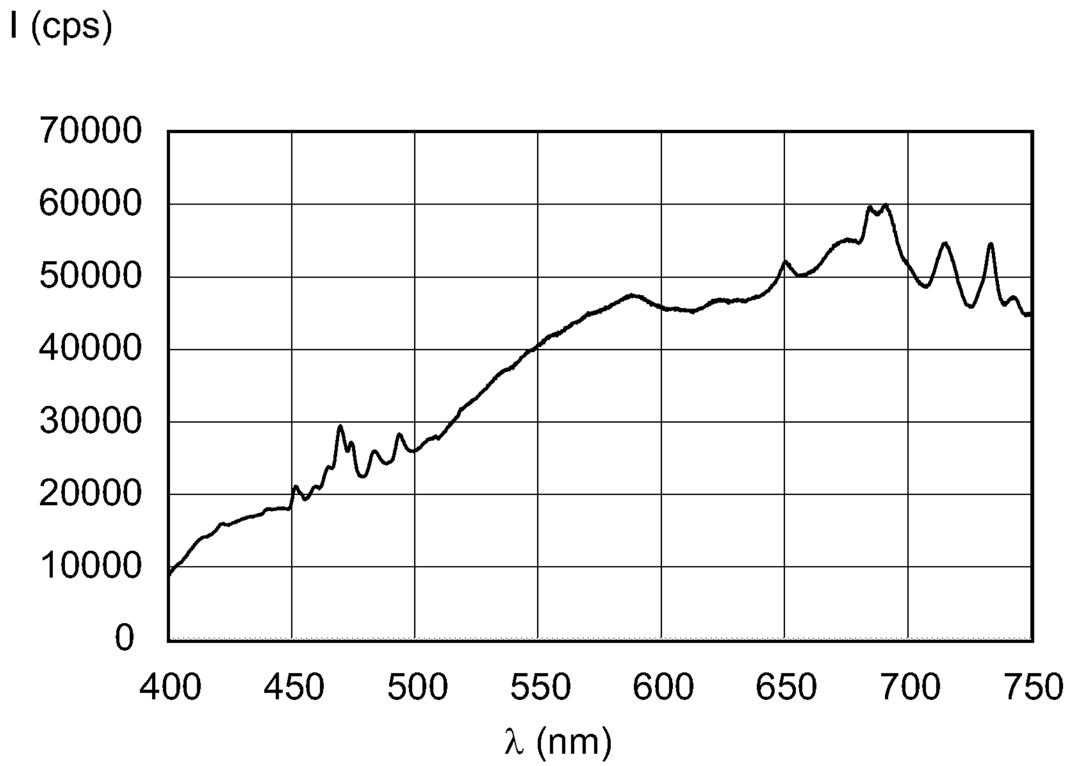
I (cps)
70000
60000
50000
40000
30000
20000
10000
0
400
450
500
550
600
650
700
750
λ (nm)

FIG. 3

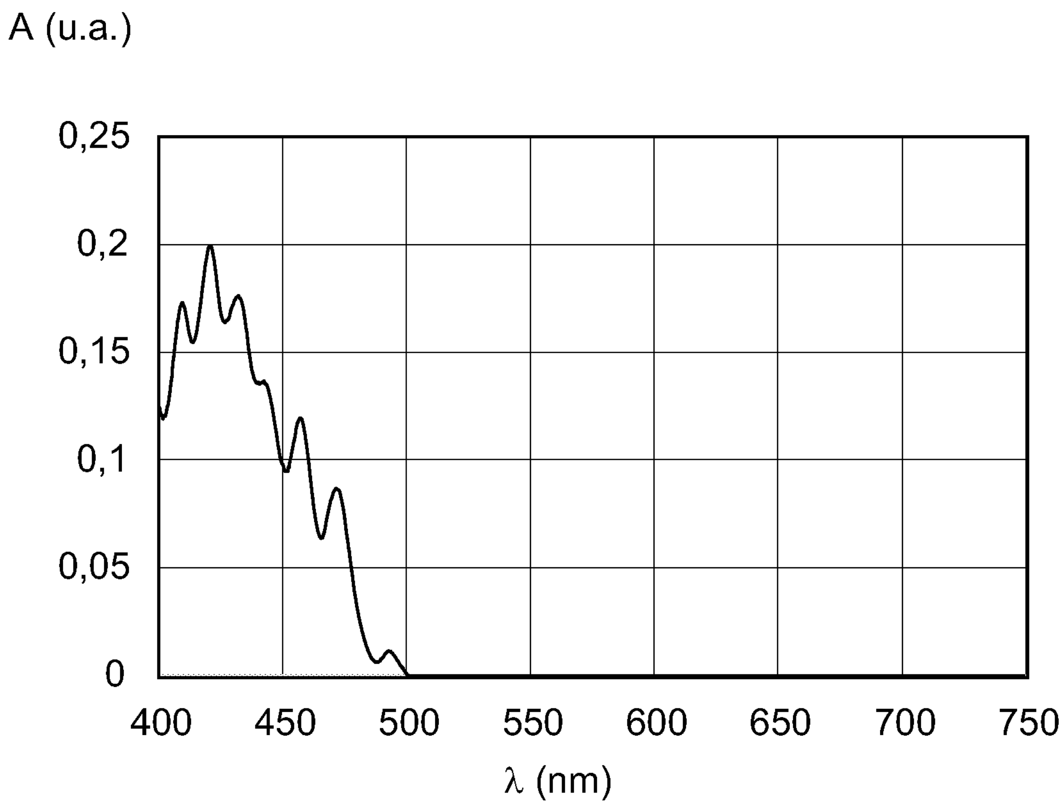
A (u.a.)
0,25
0,2
0,15
0,1
0,05
0
400
450
500
550
600
650
700
750
λ (nm)

FIG. 4

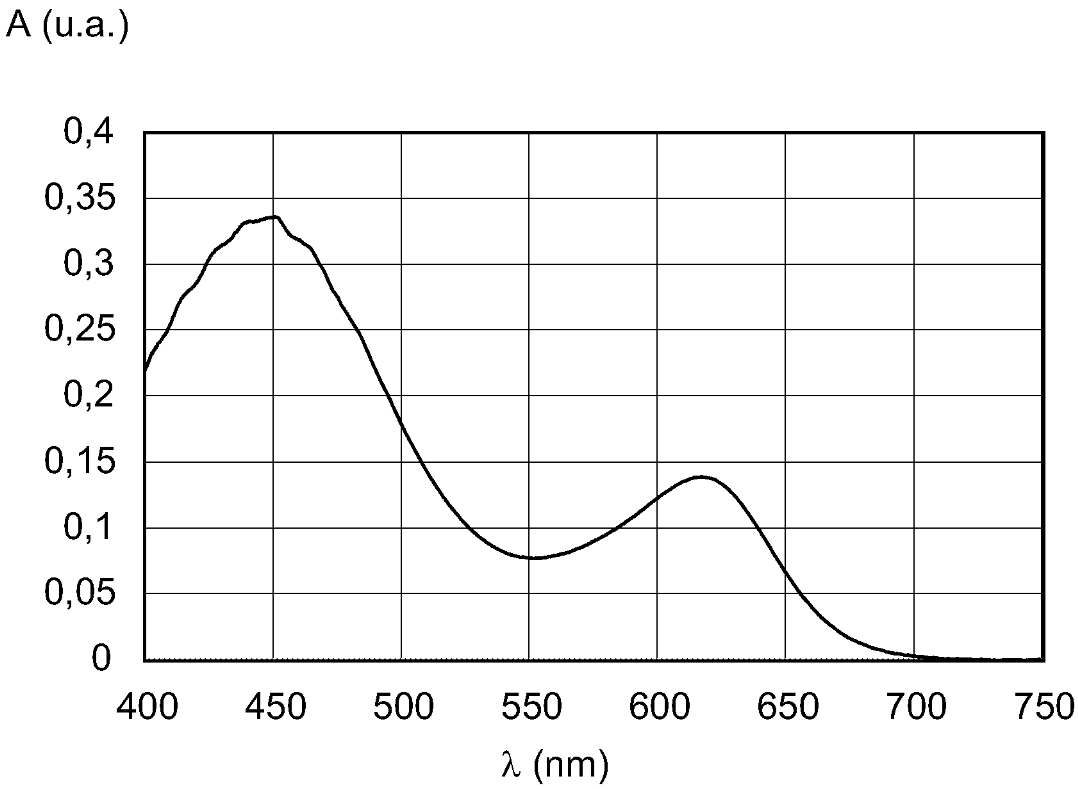
A (u.a.)
0,4
0,35
0,3
0,25
0,2
0,15
0,1
0,05
0
400
450
500
550
600
650
700
750
λ (nm)

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **T. G. SRINIVASAN ; P. R. RAO.** *Talanta,* 2014, vol. 118, 162-171
- **J. NÉRI-QUIROZ et al.** *Talanta,* 2016, vol. 159, 330-335